# EUROPEAN PATENT APPLICATION

(11) **EP 3 995 252 A1**
(43) Date of publication of application: **11.05.2022**
(21) Application number: 20837283.9
(22) Date of filing: 24.06.2020
(51) Int. Cl.: B23P 19/00, B23Q 7/04

(54) **WIRING TERMINAL CLAMPING JAW**

(30) Priority: 05.07.2019 CN 201910604446; 05.07.2019 CN 201921043845 U
(71) Applicant: Weidmüller Interface GmbH & Co. KG, 32758 Detmold (DE)
(72) Inventor: MA, Yunchang, Beijing 101112 (CN)
(74) Representative: Specht, Peter
(86) International application number: PCT/CN2020/098095
(87) International publication number: WO 2021/004290

(57) **Abstract**

The disclosure relates to a clamping jaw of connecting terminal, including a rotary cylinder component configured for achieving different swing angles for clamping different types of connecting terminals. The rotary cylinder component includes: a rotating shaft for providing driving force through rotating cylinder; an initial state limit part; first state limit part configured for realizing positioning of the rotating cylinder in a first rotation angle; and a second state limit part having a working and non-working position. When the second state limit part is in the working position, it is configured for realizing positioning of the rotating cylinder in a second rotation angle. When the second state limit part is in the non-working position, it is configured for realizing the positioning of the rotating cylinder in the first rotation angle. The second rotation angle is smaller than the first rotation angle.

## Description

### TECHNICAL FIELD

The disclosure relates to the field of power distribution, and more particularly to a clamping jaw of connecting terminal.

### BACKGROUND

With the rapid development of the power distribution industry,, automatically installing a connecting terminal on a guide rail has became inevitable trend in the development of the power distribution industry. However, due to different types and models of the connecting terminal, when the connecting terminal is automatically installed on the guide rail, a technical problem that will be confronted is how to realize clamping of different types and models of connecting terminals, and even clamping of special types of connecting terminals by one clamping device.

### SUMMARY

An object of the present disclosure is to solve at least above problems, and to provide, at least, the advantages that will be described later.

Another object of the present disclosure is to provide a clamping jaw of connecting terminal, which can solve the problem of clamping of different types and models of connecting terminals, and even clamping of special types of connecting terminals by one clamping device.

In order to achieve the above objects and other advantages, the present disclosure provides a clamping jaw of connecting terminal, comprising: a rotary cylinder component, which is configured for achieving different swing angles for clamping different types of connecting terminals; a pneumatic clamper component, which is connected with the rotary cylinder component and makes open and close movement; a terminal clamping arm component, which is connected with the pneumatic clamper component, moves with the pneumatic clamper component, and is configured for clamping a connecting terminal; wherein the rotary cylinder component comprises:
a fixing plate component, which comprises a bearing mounting plate;
a rotating shaft, which is mounted on the bearing mounting plate and provides a driving force through a rotating cylinder;
an initial state limit part, which is installed on the bearing mounting plate, is configured for realizing positioning of the rotating cylinder in an initial state of rotation;
a first state limit part, which is installed on the bearing mounting plate, is configured for realizing positioning of the rotating cylinder in a first rotation angle, the first rotation angle being rotated clockwise by a predetermined angle relative to the initial state; and
a second state limit part, which is movably installed on the bearing mounting plate, and has a working position and a non-working position relative to the bearing mounting plate; wherein when the second state limit part is in the working position, it is configured for realizing positioning of the rotating cylinder in a second rotation angle, and when the second state limit part is in the non-working position, it is configured for realizing the positioning of the rotating cylinder in the first rotation angle; wherein the second rotation angle is smaller than the first rotation angle.

Preferably, the first rotation angle is 83-85 degrees, and the second rotation angle is 15 degrees.

Preferably, the initial state limit part is a first limit block, which is provided with a semi-cylindrical clamping groove, through which a clamping component with a protrusion can be clamped.

Preferably, the first state limit part is a buffer block, which is provided with a cylinder or a quasi-cylinder.

Preferably, the second state limit part is a first positioning pin shaft, which is a cylinder or a quasi-cylinder that is stretchable relative to the bearing mounting plate.

Preferably, the first positioning pin shaft realizes its concertina movement through a needle-shaped cylinder mounted on the bearing mounting plate through a needle-shaped cylinder mounting seat.

Preferably, the pneumatic clamper component comprises:
a pneumatic clamper mounting plate, which is connected with the rotary cylinder component, makes open and close movement, and moves with the rotating cylinder component;
a pneumatic clamper, which is mounted on the pneumatic clamper mounting plate, and drives the terminal clamping arm component to move;
a second limit block, which is mounted on the pneumatic clamper mounting plate, and cooperates with the first state limit part and the second state limit part to realize positioning of the rotating cylinder in the first rotation angle and the positioning of the rotating cylinder in the second rotation angle, respectively; and
a second positioning pin shaft, which is mounted on the pneumatic clamper mounting plate, and cooperates with the initial state limit part to realize positioning of the rotating cylinder in the initial state of rotation.

Preferably, the terminal clamping arm component comprises:
a terminal clamping arm, which is fixedly connected with the pneumatic clamper;
a POM block, which is installed at a lower part of the terminal clamping arm and protruds to a side where the connecting terminal is clamped.

Preferably, a mounting column is arranged at the lower part of the terminal clamping arm, and a mounting hole is arranged at the POM block; wherein the mounting hole is sleeved on the mounting column, the POM block can slide relative to the mounting column, and a sliding direction is parallel to a movement direction of the pneumatic clamper. A rubber block is arranged between the mounting hole and the mounting column and at the side where the connecting terminal is clamped, and is configured for filling a gap between the POM block and the terminal clamping arm. At the gap between the POM block and the terminal clamping arm, the compressed rubber block has an inconsistent length when the connecting terminal is clamped, so that the POM block can wraps the connecting terminal to achieve an effect of conformal clamping without falling off.

Preferably, the POM block is a plurality of independent sub-blocks that are stacked. When clamping, the multi-layer POM block moves back and forward with the terminal clamping arm, and the terminal clamping arm plays a guiding role to achieve the purpose of conformal clamping and preventing the connecting terminal from falling off.

Preferably, the clamping jaw of connecting terminal further comprising a clamping head component, which is used for connecting the rotary cylinder component to a mechanical hand, and the clamping head component comprises:
a vertical plate, which is fixed on the rotary cylinder component;
a guiding seat, which is fixed on the mechanical hand and arranged in parallel with the vertical plate;
an optical shaft, which is fixed on the vertical plate, is sleeved with a spring, and is slidably penetrated on the guiding seat;
a fixing block, which is fixed on the optical shaft, the fixing block and the vertical plate being located on both sides of the guiding seat, respectively;
a light blocking plate, which is installed between the vertical plate and the fixing block, and is provided with a notch; and
a photoelectric switch, which is installed on the guiding seat, and can be triggered by the notch on the light blocking plate when the vertical plate compresses the spring in place.

The disclosure includes at least the following substantial improvements and beneficial effects.
1. The clamping jaw of connecting terminal of the disclosure can solve the problem of clamping of different types and models of connecting terminals, and even clamping of special types of connecting terminals by one clamping device; can also easily clamp large-size and complex-shaped connecting terminals that are not easy to be clamped.
2. The clamping jaw of connecting terminal of the disclosure can be connected to a PLC control system to realize the purpose of automatic clamping of the connecting terminal.
3. The clamping jaw of connecting terminal of the disclosure has compact mechanical structure and flexible operation, and is suitable for large-scale promotion and use.

Other advantages, objects, and features of the present disclosure will be showed in part through following description, and in part will be understood by those skilled in the art from study and practice of the present disclosure.

### BRIEF DESCRIPTION OF THE DRAWINGS

Fig. 1 is a structural diagram of the disclosure.
Fig. 2 is a structural diagram of the rotary cylinder component according to a technical solution of the disclosure.
Fig. 3 is a structural diagram of the pneumatic clamper component according to a technical solution of the disclosure.
Fig. 4 is a structural diagram of the clamping head component according to a technical solution of the disclosure.
Fig. 5 is a structural diagram of the clamping head component according to a technical solution of the disclosure.
Fig. 6 is a structural diagram of the terminal clamping arm component according to a technical solution of the disclosure.
Fig. 7 is a sectional diagram of the terminal clamping arm component according to a technical solution of the disclosure.
Fig. 8 is a structural diagram of the mechanical hand according to a technical solution of the disclosure.

### DETAILED DESCRIPTION

The following will clearly and completely describe the technical solutions in the embodiments of the present disclosure with reference to the accompanying drawings in the embodiments of the present disclosure.

It should be noted that terms such as "having", "including" and "comprising" as used herein do not exclude presence or addition of one or more other elements or combinations thereof.

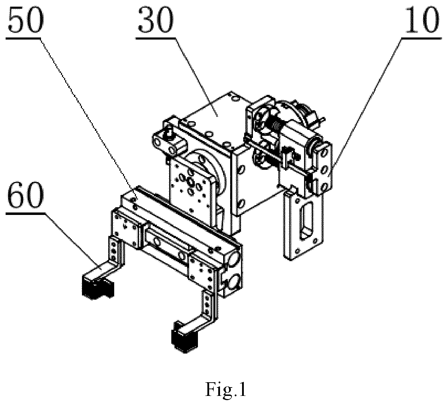

As shown in Fig. 1, the disclosure provides a clamping jaw of connecting terminal, comprising:
a rotary cylinder component 30, which is configured for achieving different swing angles for clamping different types of connecting terminals; a pneumatic clamper component 50, which is connected with the rotary cylinder component 30 and makes open and close movement; a terminal clamping arm component 60, which is connected with the pneumatic clamper component 50, moves with the pneumatic clamper component 50, and is configured for clamping a connecting terminal.

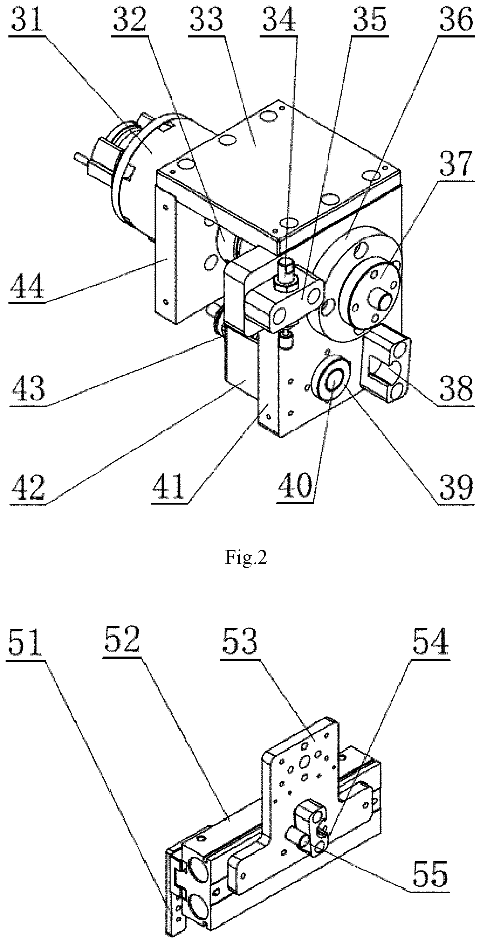

As shown in Fig. 1 and Fig. 2, the rotary cylinder component 30 comprises:
a fixing plate component, which comprises a bearing mounting plate 41, a rotating cylinder fixing plate 44 and a rotating cylinder top plate 33; wherein the rotating cylinder top plate 33 is arranged horizontally, and the rotating cylinder fixing plate 44 and the bearing mounting plate 41 are respectively arranged on opposite sides of the rotating cylinder top plate 33 and are perpendicular to the rotating cylinder top plate 33 for forming a gate shape to place components;
a rotating shaft 37, which is mounted on the bearing mounting plate 41 through a rotating shaft bearing seat 36 and provides a driving force through a rotating cylinder 31; wherein the rotating shaft 37 and the rotating cylinder 31 are connected by a coupling 32 to transmit a driving force, and the coupling 32 is arranged under the rotating cylinder top plate 33 so that the components are compact;
an initial state limit part, which is installed on the bearing mounting plate 41, is configured for realizing positioning of the rotating cylinder 31 in an initial state of rotation; wherein the initial state limit part may be a buffer component, a toggle block, a block with a clamping groove, or a manual toggle component;
a first state limit part, which is installed on the bearing mounting plate 41, is configured for realizing positioning of the rotating cylinder 31 in a first rotation angle, the first rotation angle being rotated clockwise by a predetermined angle relative to the initial state, and wherein the first state limit part may be a buffer component, a toggle block, a block with a clamping groove, or a manual toggle component; and
a second state limit part, which is movably installed on the bearing mounting plate 41, and has a working position and a non-working position relative to the bearing mounting plate 41; wherein when the second state limit part is in the working position, it is configured for realizing positioning of the rotating cylinder 31 in a second rotation angle, and when the second state limit part is in the non-working position, it is configured for realizing the positioning of the rotating cylinder 31 in the first rotation angle; wherein the second rotation angle is smaller than the first rotation angle; wherein second state limit part may be a manual telescopic column or an automatic telescopic shaft, and wherein the automatic telescopic shaft can realize its telescopic function through an air cylinder, a screw rod or an elastic component.

In the above technical solution, the rotating cylinder 31 rotates at different angles to realize the clamping of different types of connecting terminals, and a specific process is as follow: S1, initialization: the initial state limit part positioning the rotating cylinder 31 to an initial state, and the pneumatic clamper component starting to work; S2, clamping the connecting terminal: a mechanical hand moving a clamping jaw of a connecting terminal along the Y-axis or along the X-axis (if necessary) to the vicinity of a elastic clamp, moving the clamping jaw of the connecting terminal downward along the Z axis, the pneumatic clamper component driving the terminal clamping arm component to clamp the connecting terminal, moving the clamping jaw of the connecting terminal upward along the Z axis and clamping up the connecting terminal to be clamped; S3, transport and rotation of the connecting terminal: moving the clamping jaw of the connecting terminal along the Y axis or along the X axis (if necessary) to the vicinity of a guiding rail, and simultaneously rotating the rotating cylinder 31 until the connecting terminal is positioned. The rotation of the rotating cylinder 31 until the connecting terminal is positioned is completed by the following process: S31, a control mechanism recognizing the type of connecting terminals to be installed, and clamping two types of connecting terminals to be installed at one time; wherein a rotation angle is the first rotation angle when a first type of connecting terminal is installed, and a rotation angle is the second rotation angle when a second type of connecting terminal is installed; S32, the control mechanism selecting limit parts according to the types of connecting terminals to be installed, the first state limit part starting to work and the rotating cylinder 31 being positioned at the first rotation angle if the connecting terminal to be installed is the first type; and the second state limit part starting to work and the rotating cylinder 31 being positioned at the second rotation angle if the connecting terminal to be installed is the second type; S4, clamping the connecting terminal: disconnecting air supply for the rotating cylinder 31, moving the clamping jaw of the connecting terminal downward along the Z axis, contacting the connecting terminal to be installed with the guiding rail, separating the pneumatic clamper component from the first state limit part or the second state limit part under the drive of the reaction force of the guiding rail, resetting and rotating the connecting terminal, and clamping the connecting terminal with the guiding rail.

In an actual production, there are various types of connecting terminals, and various types of connecting terminals are clamped by different devices or multiple mechanical hands in prior art. One clamping jaw of connecting terminal of the present disclosure can clamp various types of connecting terminals without requiring multiple mechanical hands to operate, and has more flexible operation.

In one technical solution, the first rotation angle is 83-85 degrees, and the second rotation angle is 15 degrees. The set angles are inclination angles required when clamping two most common types of connecting terminals.

As shown in Fig. 2, in one technical solution, the initial state limit part is a first limit block 38, which is provided with a semi-cylindrical clamping groove. A clamping component with a protrusion can be clamped through the clamping groove, which realizes positioning automation.

As shown in Fig. 2, in one technical solution, the first state limit part is a buffer block 34, wherein the buffer block 34 is mounted on the bearing mounting plate 41 through a buffer block mounting plate 35, and is provided with a cylinder or a quasi-cylinder. The buffer block 34 of cylinder or a quasi-cylinder can cooperate with a component with a clamping groove structure to achieve the purpose of automatic positioning

As shown in Fig. 2, in one technical solution, the second state limit part is a first positioning pin shaft 40, which is a cylinder or a quasi-cylinder that is stretchable relative to the bearing mounting plate 41. The first positioning pin shaft 40 is installed on the bearing mounting plate 41 through a positioning pin shaft seat 39, and is located between the buffer block 34 and the first limit block 38. When the first positioning pin shaft 40 stretches out, the rotation angle of the rotating cylinder 31 is positioned at 15 degrees, and when the first positioning pin shaft 40 draws back, the rotating cylinder 31 can be rotated to 83-85 degrees.

As shown in Fig. 2, in one technical solution, the first positioning pin shaft 40 realizes its concertina movement through a needle-shaped cylinder 43, and the needle-shaped cylinder 43 is mounted on the bearing mounting plate 41 through a needle-shaped cylinder mounting seat 42. The needle-shaped cylinder 43 realizes the automatic operation of the second state limit part, and improves the operation efficiency.

As shown in Fig. 1 and Fig. 3, in one technical solution, the pneumatic clamper component 50 is connected with the rotary cylinder component 30 to realize the movement of the terminal clamping arm component 60. The pneumatic clamper component 50 comprises:
a pneumatic clamper mounting plate 53, which is connected with the rotary cylinder component 30, specifically the pneumatic clamper mounting plate 53 being provided with a mounting hole, which is connected to a rotating shaft 37 in the rotary cylinder component 30;
a pneumatic clamper 52, which is mounted on the pneumatic clamper mounting plate 53, and drives the terminal clamping arm component 60 to move; wherein the terminal clamping arm component 60 is connected with the pneumatic clamper 52 through a terminal clamping arm component mounting plate 51;
a second limit block 54, which is mounted on the pneumatic clamper mounting plate 53, and cooperates with the first state limit part to realize positioning of the rotating cylinder 31 in the first rotation angle; specifically, a clamping groove being arranged at the second limit block 54 mounted on the pneumatic clamper component 50, the clamping groove being provided with a silicone-containing pad for buffering, when the first positioning pin shaft 40 stretching out the rotation angle of the rotating cylinder 31 being positioned at 15 degrees and the first positioning pin shaft 40 being clamped with the second limit block 54 mounted on the pneumatic clamper component 50, and when the first positioning pin shaft 40 drawing back the buffer block 34 being clamped with the second limit block 54 mounted on the pneumatic clamper component 50, and the the rotating cylinder 31 being allowed to be rotated to 83-85 degrees; and
a second positioning pin shaft 55, which is mounted on the pneumatic clamper mounting plate 53, and cooperates with the initial state limit part to realize positioning of the rotating cylinder 31 in the initial state of rotation; specifically, in the initial state of rotation, the first limit block 38 on the rotary cylinder component 30 being clamped with the second positioning pin shaft 55 on the pneumatic clamper component 50.

In the above technical solution, components on the pneumatic clamper component 50 are clamped with the first state limit part and the second state limit part to realize the positioning of the rotating cylinder 32 at different rotation angles, so that the entire device has higher stability and flexibility.

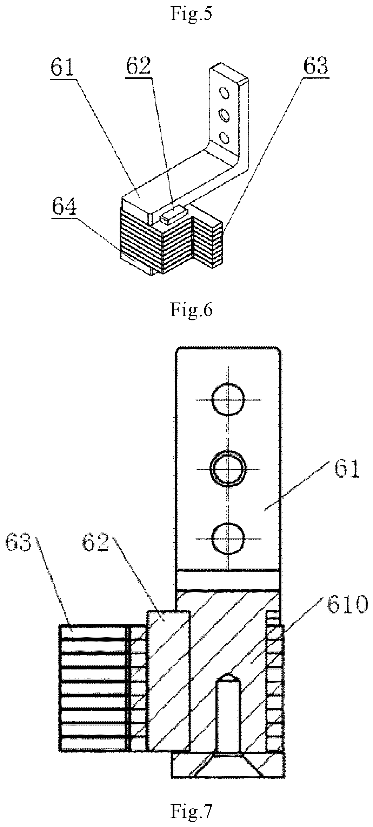

As shown in Fig. 6, in one technical solution, the terminal clamping arm component 60 comprises:
a terminal clamping arm 61, which is fixedly connected with the pneumatic clamper 52;
a POM (polyformaldehyde) block 63, which is installed at a lower part of the terminal clamping arm 61 and protrudes to a side where the connecting terminal is clamped.

In the above technical solution, in a clamping process, the POM block 63 is installed between the terminal clamping arm 61 and a square pressing plate 64, the POM block 63 moves back and forward with the terminal clamping arm 61, and the terminal clamping arm 61 plays a guiding role, so as to achieve the purpose of conformal clamping and preventing the connecting terminal from falling off. In the prior art, clamping jaws are generally metal clamping jaws or plastic flexible clamping jaw. The metal clamping jaws have high rigidity and low elastic deformability, which can easily cause damage to the surface of a clamped object; and the flexible clamping jaws, which are mainly made of plastic material, have high elasticity and low rigidity, which cannot meet the requirement of clamping of the connecting terminal. In the technical solution, the clamping jaw made of POM block 63 has high rigidity, good elasticity and antifriction and wear resistance, which is not easy to damage the surface of the clamped object.

As shown in Fig. 6 and Fig. 7, in one technical solution, a mounting column 610 is arranged at a lower part of the terminal clamping arm 61, and a mounting hole is arranged at the POM block 63. The mounting hole is sleeved on the mounting column 610, the POM block 63 can slide relative to the mounting column 610, and a sliding direction is parallel to a movement direction of the pneumatic clamper 52. A rubber block 62 is arranged between the mounting hole and the mounting column 610 and at the side where the connecting terminal is clamped. Specifically, the mounting column 610 is a square column, and the mounting hole is a square hole. The mounting hole is sleeved on the mounting column 610, and the width of the mounting hole is larger than the width of the mounting column 610, so that the POM block 63 can slide relative to the mounting column 610, and the sliding direction is parallel to a movement direction of the pneumatic clamper 52. The rubber block 62 is arranged between the mounting hole and the mounting column 610 and at the side where the connecting terminal is clamped. In a clamping process, the compression amount of an arc shape on the connecting terminal surface to the rubber block 62 is different, which results in different sliding distances of the POM block on the mounting column 610 to realize fit of the POM block and the arc shape on the connecting terminal surface and then to achieve conformal clamping and prevent the connecting terminal from falling off. Therefore, the terminal clamping arm component 60 has wider application range.

In one technical solution, the POM block 63 is a plurality of independent sub-blocks that are stacked. Preferably, the POM block 63 includes 3-12 independent sub-blocks that are stacked. In the clamping process, the multi-layer POM block 63 moves back and forward with the terminal clamping arm 61, and the terminal clamping arm 61 plays a guiding role to achieve the purpose of conformal clamping and preventing the connecting terminal from falling off. The setting of multiple independent sub-blocks allows the conformal clamping from the point to the surface to prevent the connecting terminal from falling off.

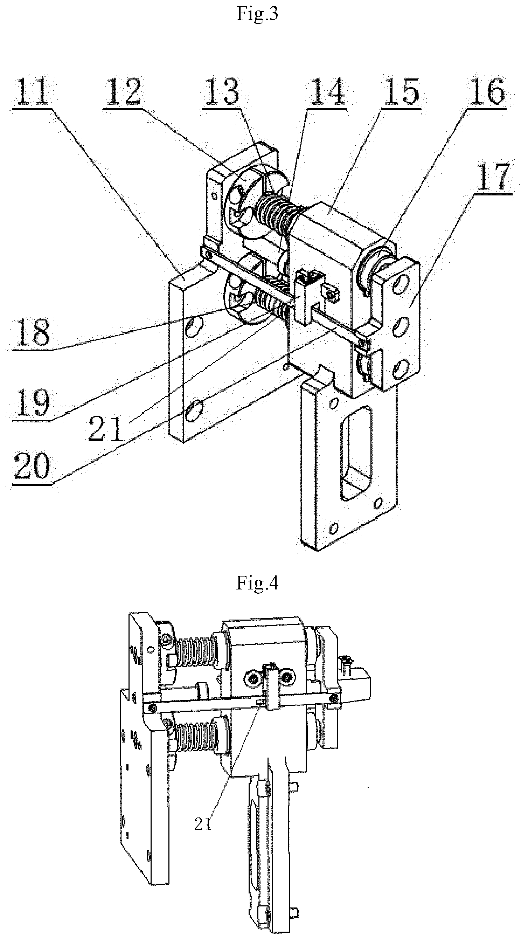

As shown in Fig. 1, Fig. 4 and Fig. 5, in one technical solution, the clamping jaw of connecting terminal further comprises a clamping head component 10, which is used for connecting the rotary cylinder component 30 to a mechanical hand, and the clamping head component 10 comprises:
a vertical plate 11, which is fixed on the rotary cylinder component 30; specifically, wherein the vertical plate 11 is connected to the bearing mounting plate 41 and the rotating cylinder fixing plate 44 by screws; and the vertical plate 11 may also be preferably provided with a limit column 14 that limits its movement;
a guiding seat 15, which is fixed on the mechanical hand and arranged in parallel with the vertical plate 11; wherein a three-axis mechanical hand is shown in Fig. 6, which can realizes the X, Y, Z three-axis linkage;
an optical shaft 18, which is fixed on the vertical plate 11 through an optical shaft fixing seat 12, is sleeved with a spring 13, and is slidably penetrated on the guiding seat 15; preferably, wherein the optical shaft 18 is further provided with a linear bearing 16; and more preferably, two sets of the optical shafts 18 are provided;
a fixing block 17, which is fixed on the optical shaft 18, the fixing block 17 and the vertical plate 11 being located on both sides of the guiding seat 15, respectively;
a light blocking plate 20, which is installed between the vertical plate 11 and the fixing block 17, and is provided with a notch 21; and
a photoelectric switch 19, which is installed on the guiding seat 15, and can be triggered by the notch 21 on the light blocking plate 20 when the vertical plate 11 compresses the spring 13 in place, so as to feedback the information of whether the connecting terminal is clamped.

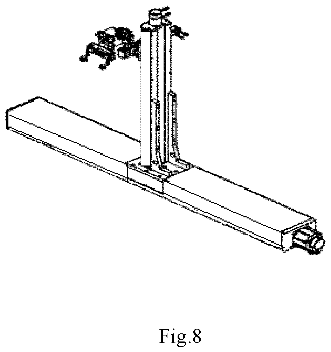

As shown in Fig. 8, a clamping process of the mechanical hand is as follow:
S1, initialization: the second positioning pin shaft 55 is clamped to the first limit block 38. At this time, the angle of the rotating cylinder 31 is 0 degree, and the pneumatic clamper 52 is opened.

S2, clamping the connecting terminal: a clamping jaw of a connecting terminal moves along the Y-axis or along the X-axis (if necessary) to the vicinity of the elastic clamp, the clamping jaw of the connecting terminal moves downward along the Z axis, the pneumatic clamper 52 drives the POM block to to clamp the connecting terminal to be clamped, and the clamping jaw of the connecting terminal moves upward along the Z axis to clamp up the connecting terminal to be clamped.

S3, transport and rotation of the connecting terminal: the clamping jaw of the connecting terminal moves along the Y axis or along the X-axis (if necessary) to the vicinity of the guiding rail, and the rotating cylinder 31 is simultaneously rotated until the connecting terminal is positioned.

The rotation of the rotating cylinder 31 until the connecting terminal is positioned is completed by the following process: S31, the control mechanism recognizes the type of connecting terminals to be installed. In the embodiment, there are two types of connecting terminals to be installed, a first type is installed at a rotation angle of 15 degrees, and a second type is installed at a rotation angle of 83-85 degrees. S32, the control mechanism selects limit parts according to the types of connecting terminals to be installed. If the connecting terminal to be installed is the first type, the needle-shaped cylinder 43 is controlled to stretch out and to drive the first positioning pin shaft 40 to stretch out , which indicates that the first positioning pin shaft 40 is selected for positioning. If the connecting terminal to be installed is the second type, the needle-shaped cylinder 43 is controlled to draw back and to drive the first positioning pin shaft 40 to draw back, which indicates that the buffer block 34 is selected for positioning. S33, the rotating cylinder 31 is rotated until the second limit block 54 is clamped to the first positioning pin shaft 40 or the buffer block 34 to realize that the connecting terminal to be installed can be rotated at an angle of 15 degrees or 83-85 degrees.

S4, clamping the connecting terminal: air supply for the rotating cylinder 31 is disconnected, and the clamping jaw of the connecting terminal moves downward along the Z axis. When the connecting terminal to be installed is in contact with the guiding rail, the second limit block 54 is separated from the first positioning pin shaft 40 or the buffer block 34 under the drive of the reaction force of the guiding rail, the connecting terminal is subjected to reset rotation, and the connecting terminal is clamped with the guiding rail. At this time, the second positioning pin shaft 55 is clamped to the first limit block 38.

S5, confirming of clamping in place: the rotation during the clamping process of the connecting terminal brings a thrust and displacement in the Y-axis direction. The vertical plate 11 moves relative to the guiding seat 15, and the notch 21 on the light blocking plate 20 can trigger the photoelectric switch 19 to confirm that the clamping is in place. If the photoelectric switch 19 is triggered, the pneumatic clamper 52 is opened, and the clamping jaw of the connecting terminal moves upward along the Z axis, return to the step S2 to continue clamping. In the step S4, if the connecting terminal is not in contact with the guiding rail or the connecting terminal is not clamped to the guiding rail due to some reasons, this will cause that the photoelectric switch 19 can not be triggered. The system will issue an alarm. The clamping jaw of connecting terminal of the disclosure can solve the problem of clamping of different types and models of connecting terminals, and even clamping of special types of connecting terminals by one clamping device; can also easily clamp large-size and complex-shaped connecting terminals that are not easy to be clamped. The clamping jaw of connecting terminal has compact mechanical structure and flexible operation, and is suitable for large-scale promotion and use.

As mentioned above, the disclosure includes at least the following substantial improvements and beneficial effects: 1. The clamping jaw of connecting terminal of the disclosure can solve the problem of clamping of different types and models of connecting terminals, and even clamping of special types of connecting terminals by one clamping device; can also easily clamp large-size and complex-shaped connecting terminals that are not easy to be clamped. 2. The clamping jaw of connecting terminal of the disclosure can be connected to a PLC control system to realize the purpose of automatic clamping of the connecting terminal. 3. The clamping jaw of connecting terminal of the disclosure has compact mechanical structure and flexible operation, and is suitable for large-scale promotion and use.

Although the embodiments of the present disclosure have been shown and described, those of ordinary skill in the art can understand that various changes, modifications, replacements and variations can be made to these embodiments without departing from the principle and spirit of the present disclosure, and the scope of the present disclosure is defined by the appended claims and their equivalents.

## Claims

1. A clamping jaw of connecting terminal, comprising: a rotary cylinder component, which is configured for achieving different swing angles for clamping different types of connecting terminals; a pneumatic clamper component, which is connected with the rotary cylinder component and makes open and close movement; a terminal clamping arm component, which is connected with the pneumatic clamper component, moves with the pneumatic clamper component, and is configured for clamping a connecting terminal; wherein the rotary cylinder component comprises:
a fixing plate component, which comprises a bearing mounting plate;
a rotating shaft, which is mounted on the bearing mounting plate and provides a driving force through a rotating cylinder;
an initial state limit part, which is installed on the bearing mounting plate, is configured for realizing positioning of the rotating cylinder in an initial state of rotation;
a first state limit part, which is installed on the bearing mounting plate, is configured for realizing positioning of the rotating cylinder in a first rotation angle, the first rotation angle being rotated clockwise by a predetermined angle relative to the initial state; and
a second state limit part, which is movably installed on the bearing mounting plate, and has a working position and a non-working position relative to the bearing mounting plate; wherein when the second state limit part is in the working position, it is configured for realizing positioning of the rotating cylinder in a second rotation angle, and when the second state limit part is in the non-working position, it is configured for realizing the positioning of the rotating cylinder in the first rotation angle; wherein the second rotation angle is smaller than the first rotation angle.

2. The clamping jaw of connecting terminal according to claim 1, wherein the first rotation angle is 83-85 degrees, and the second rotation angle is 15 degrees.

3. The clamping jaw of connecting terminal according to claim 2, wherein the initial state limit part is a first limit block, which is provided with a semi-cylindrical clamping groove, through which a clamping component with a protrusion can be clamped.

4. The clamping jaw of connecting terminal according to claim 2, wherein the first state limit part is a buffer block, which is provided with a cylinder or a quasi-cylinder.

5. The clamping jaw of connecting terminal according to claim 2, wherein the second state limit part is a first positioning pin shaft, which is a cylinder or a quasi-cylinder that is stretchable relative to the bearing mounting plate.

6. The clamping jaw of connecting terminal according to claim 5, wherein the first positioning pin shaft realizes its concertina movement through a needle-shaped cylinder mounted on the bearing mounting plate through a needle-shaped cylinder mounting seat.

7. The clamping jaw of connecting terminal according to claim 1, wherein the pneumatic clamper component comprises:
a pneumatic clamper mounting plate, which is connected with the rotary cylinder component, makes open and close movement, and moves with the rotating cylinder component;
a pneumatic clamper, which is mounted on the pneumatic clamper mounting plate, and drives the terminal clamping arm component to move;
a second limit block, which is mounted on the pneumatic clamper mounting plate, and cooperates with the first state limit part and the second state limit part to realize positioning of the rotating cylinder in the first rotation angle and the positioning of the rotating cylinder in the second rotation angle, respectively; and
a second positioning pin shaft, which is mounted on the pneumatic clamper mounting plate, and cooperates with the initial state limit part to realize positioning of the rotating cylinder in the initial state of rotation.

8. The clamping jaw of connecting terminal according to claim 1, wherein the terminal clamping arm component comprises:
a terminal clamping arm, which is fixedly connected with the pneumatic clamper;
a POM block, which is installed at a lower part of the terminal clamping arm and protruds to a side where the connecting terminal is clamped.

9. The clamping jaw of connecting terminal according to claim 8, wherein a mounting column is arranged at the lower part of the terminal clamping arm, and a mounting hole is arranged at the POM block; wherein the mounting hole is sleeved on the mounting column, the POM block can slide relative to the mounting column, a sliding direction is parallel to a movement direction of the pneumatic clamper, and a rubber block is arranged between the mounting hole and the mounting column and at the side where the connecting terminal is clamped.

10. The clamping jaw of connecting terminal according to claim 9, wherein the POM block is a plurality of independent sub-blocks that are stacked.

11. The clamping jaw of connecting terminal according to claim 1, further comprising a clamping head component, which is used for connecting the rotary cylinder component to a mechanical hand, wherein the clamping head component comprises:
a vertical plate, which is fixed on the rotary cylinder component;
a guiding seat, which is fixed on the mechanical hand and arranged in parallel with the vertical plate;
an optical shaft, which is fixed on the vertical plate, is sleeved with a spring, and is slidably penetrated on the guiding seat;
a fixing block, which is fixed on the optical shaft, the fixing block and the vertical plate being located on both sides of the guiding seat, respectively;
a light blocking plate, which is installed between the vertical plate and the fixing block, and is provided with a notch; and
a photoelectric switch, which is installed on the guiding seat, and can be triggered by the notch on the light blocking plate when the vertical plate compresses the spring in place.
